**Europäisches Patentamt**

**European Patent Office**

**Office européen des brevets**

(19)

(11) Veröffentlichungsnummer : **0 145 944**
**B1**

(12) **EUROPÄISCHE PATENTSCHRIFT**

(45) Veröffentlichungstag der Patentschrift :
20.01.88

(51) Int. Cl.⁴ : **F 27 B  9/24**, B 65 G  47/31,
C 04 B  33/34

(21) Anmeldenummer : 84113546.0

(22) Anmeldetag : 09.11.84

(54) **Verfahren und Vorrichtung zum Brennen von glasierten Fliesen.**

(30) Priorität : 19.12.83 DE 3345850

(43) Veröffentlichungstag der Anmeldung :
26.06.85 Patentblatt 85/26

(45) Bekanntmachung des Hinweises · auf die Patenterteilung : 20.01.88 Patentblatt 88/03

(84) Benannte Vertragsstaaten :
DE FR GB IT NL

(56) Entgegenhaltungen :
CH-A-  425 594
FR-A- 2 447 526
US-A- 3 606 281
US-A- 3 985 495
US-A- 4 183 885

(73) Patentinhaber : **VILLEROY & BOCH Keramische
Werke KG
D-6642 Mettlach/Saar (DE)**

(72) Erfinder : **Der Erfinder hat auf seine Nennung verzichtet**

(74) Vertreter : **Bernhardt, Winfrid, Dr.-Ing.
Kobenhüttenweg 43
D-6600 Saarbrücken (DE)**

## Beschreibung

Die Erfindung betrifft ein Verfahren zum Brennen von glasierten Fliesen in einem Rollenofen, bei dem die Fliesen unmittelbar auf die Rollen aufgelegt und von diesen transportiert werden und der Abstand zwischen den Kanten der Fliesen so bemessen wird, daß eine Berührung während des Durchlaufs durch die Brennzone verhindert wird. Ferner betrifft die Erfindung eine Vorrichtung zur Durchführung des Verfahrens.

Zum Brennen von Fliesen haben sich Rollenöfen sehr bewährt, da durch ihre Verwendung die Brennzeit stark herabgesetzt werden konnte. Dies gilt insbesondere im Verhältnis zu Tunnelöfen mit Brennwagen. Die Herabsetzung der Brennzeit, d. h. der Verweilzeit in dem Ofen, hat unmittelbar Einfluß auf den Energieverbrauch.

Aus der CH-PS 425 594 ist das eingangs genannte Verfahren bekannt. Danach werden keramische Platten im Einbrand-Verfahren gebrannt, wobei sie, unmittelbar auf den Rollen liegend, auch von unten her beheizt werden. Der Abstand zwischen den Platten ist nach der Zeichnung verhältnismäßig groß.

In der Praxis werden zunehmend Fliesen verlangt, die an mindestens einer Kante, häufig an zwei aneinander angrenzenden Kanten, glasiert sind. Diese sind dann die Kanten, die bei Abschlüssen und Ecken nach dem Verlegen der Fliesen sichtbar bleiben. Um eine komplizierte Lagerhaltung zu vermeiden, kann es daher sinnvoll sein, von vornherein sämtliche Fliesen an mindestens einer Kante zu glasieren. Wenn derartige Fliesen zum Brennen durch einen Brennofen bewegt werden, muß sichergestellt werden, daß sich diese mit den glasierten Kanten nicht berühren. Eine derartige Berührung führt in der Brennzone zu einer Verbindung, die nach dem Austritt der Fliese aus dem Ofen nur durch Zerstörung wieder gelöst werden kann. Um eine solche Berührung zu verhindern, aber dennoch das Brennen in einem Rollenofen mit geringen Abständen durchführen zu können, werden Zwischenträger verwendet, auf die die zu brennenden Fliesen aufgelegt werden und die dann von den Rollen durch den Rollenofen bewegt werden. Diese Zwischenträger verhindern, daß sich die Fliesen während des Transportes nennenswert gegeneinander verschieben, so daß sich die Fliesen an ihren glasierten Kanten auch nicht berühren können. Wenn die Fliesen ohne einen derartigen Zwischenträger, d. h. durch unmittelbares Auflegen auf die Rollen durch einen Rollenofen transportiert werden, verschieben sie sich relativ stark gegeneinander. Insbesondere die außen liegenden Fliesen werden im Verhältnis zu den im Bereich der Mittellinie liegenden Fliesen stärker bewegt, so daß es zu Berührungen im Bereich der glasierten Kanten kommt.

Zum Brennen von Steinzeug, das während des Brennens stark schrumpft (im Bereich von 7 %) ist es bereits vorgeschlagen worden, die Rollen unter Berücksichtigung des Schrumpfens in Transportrichtung fortschreitend entsprechend langsamer anzutreiben, um den Abstand zwischen dem Steinzeug möglichst konstant zu halten und so keinen wertvollen Raum zu verschenken.

Der Erfindung liegt die Aufgabe zugrunde, ein Verfahren und eine Vorrichtung zu schaffen, die ein möglichst wirtschaftliches Brennen von an mindestens einer Kante glasierten Fliesen in einem Rollenofen ermöglichen, ohne dabei das Risiko einzugehen, daß sich die Fliesen an ihren glasierten Kanten berühren und damit zusammenkleben.

Diese Aufgabe wird mit einem Verfahren der eingangs genannten Art dadurch gelöst, daß die Fliesen mit einer glasierten Kante nach vorn oder hinten angeordnet werden und die Rollen in der Brennzone schneller als die Rollen vor der Brennzone angetrieben werden, so daß sich der Abstand zwischen den Kanten der Fliesen in Transportrichtung vergrößert.

Es werden also die an einer Kante glasierten Fliesen unmittelbar auf die Rollen aufgelegt. Auf die Verwendung eines Zwischenträgers wird verzichtet. Hierdurch wird Energie eingespart, da der Zwischenträger nicht mit erwärmt und anschließend wieder abgekühlt werden muß. Weiterhin wird in der Brennzone, in dem eine Berührung zum Verkleben durch die Glasur führen würde, infolge des dort schnelleren Antriebs der Rollen der Abstand so weit vergrößert, daß die Berührung sicher verhindert wird.

Im Anschluß an die Brennzone, d. h. in der Kühlzone, kann dann wieder etwas langsamer gefahren werden, so daß sich der Abstand wieder verringert.

Auf der einen Seite wird ein möglichst geringer Abstand ermöglicht, damit der Ofen zur Sicherstellung einer bestimmten Verweilzeit nicht unnötig lang ausgeführt werden muß, zum anderen wird der Abstand in dem Bereich, in dem mit Sicherheit eine Berührung verhindert werden soll, so groß gemacht, daß dieses Ziel erreicht wird.

Eine Vorrichtung, d. h. ein Rollenofen zur Durchführung des erfindungsgemäßen Verfahrens, weist eine Trocken- oder Vorwärmzone, eine Brennzone und eine Kühlzone auf und kennzeichnet sich dadurch, daß die Rollen in der Brennzone mit höherer Geschwindigkeit antreibbar sind als in den anderen Zonen.

Vorzugsweise sind die Rollen in der Brennzone in zwei Abschnitte zusammengefaßt, von denen die Rollen des in Transportrichtung ersten Abschnitts etwas langsamer als die Rollen des anschließenden Abschnitts antreibbar sind.

Im folgenden wird die Erfindung unter Hinweis auf die Zeichnung anhand eines Ausführungsbeispiels näher erläutert.

Es zeigen :

Fig. 1 eine schematische Seitenansicht eines Rollenofens zur Durchführung des erfindungsgemäßen Verfahrens ; und

Fig. 2 eine grafische Darstellung zur Veranschaulichung des Abstandes zwischen den Fliesen im Verhältnis zu der Behandlungstemperatur in einem Rollenofen nach Fig. 1.

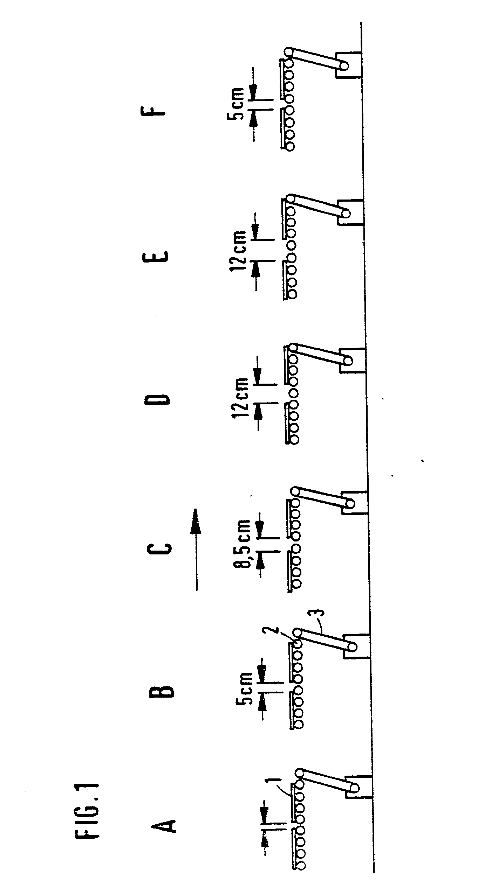

In einem Rollenofen, wie er schematisch in Fig. 1 dargestellt ist, werden quadratische oder rechteckige Fliesen gebrannt. Es liegen hierbei mehrere Fliesen nebeneinander. Wenn diese Fliesen lediglich an einer Kante glasiert sind, so liegt diese Kante senkrecht zur Transportrichtung, vorzugsweise vorne. Wenn zwei aneinander angrenzende Kanten einer Fliese glasiert sind, so muß der seitliche Abstand, d. h. der Abstand senkrecht zur Transporteinrichtung, von vornherein so groß sein, daß hier eine Berührung sicher verhindert wird. Seitlich verrutschen die Fliesen während des Transportes aber nicht so stark, so daß der Abstand in Transportrichtung als der kritischere bezeichnet werden kann. Im übrigen werden die meisten Fliesen auch nur an einer Kante glasiert.

Der Brennofen gliedert sich in verschiedene Abschnitte A-F. In dem Abschnitt A werden die Fliesen aufgelegt und in den Brennofen eingeführt. Der Abschnitt B kann als Trocken- oder Vorwärmzone bezeichnet werden. Hier wird ein normaler Abstand von beispielsweise 5 cm zwischen den einzelnen Fliesen in Transportrichtung eingestellt.

An den Abschnitt B schließen sich die Abschnitte C und D an, die die eigentliche Brennzone bilden. Der Abschnitt E stellt einen Übergang in die Kühlzone, den Abschnitt F, dar.

Im Abschnitt C werden die Rollen schneller angetrieben, so daß sich der Abstand zwischen den Fliesen beispielsweise auf 8,5 cm vergrößert. Die Rollen im Abschnitt D laufen noch etwas schneller, so daß der Abstand sich weiter erhöht, beispielsweise auf 12 cm. Die Antriebsgeschwindigkeit im Abschnitt E entspricht derjenigen im Abschnitt D, so daß der Abstand erhalten bleibt. Im Abschnitt F werden die Rollen dann wieder langsamer angetrieben, so daß sich im wesentlichen der Abstand aus dem Abschnitt B wieder einstellt.

Es ist ersichtlich, daß in den Abschnitten in denen mit Sicherheit ein Berühren verhindert werden muß, der Abstand durch Erhöhung der Geschwindigkeit der Rollen so groß gewählt wird, daß dieses Ziel erreicht wird. Wenn dann eine Berührung nicht mehr kritisch ist, kann der Abstand wieder verringert werden. Dies ist dann der Fall, wenn die Glasur in der Kühlzone schon so weit erhärtet ist, daß eine Berührung nicht mehr zum Verkleben führt.

In der Fig. 1 sind die Fliesen mit 1, die Rollen mit 2 und die Antriebe mit 3 bezeichnet.

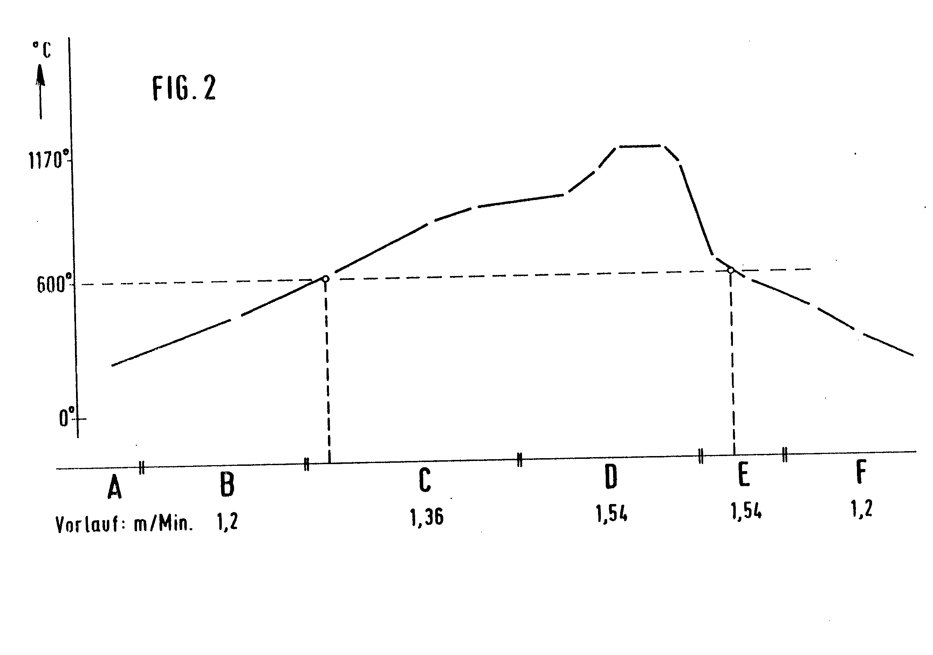

Fig. 2 ist ein Schaubild, in dem der Temperaturverlauf über die Ofenlänge dargestellt ist. Die einzelnen Abschnitte A-F entsprechen denjenigen der Fig. 1. Die angegebenen Zeiten in Minuten sind die jeweiligen Durchlaufgeschwindigkeiten im Ofen, woraus sich bei dem dargestellten Beispiel eine Gesamtverweilzeit von 45,8 min ergibt.

Da lediglich im Bereich der Brennzone die Rollen beschleunigt werden und damit der Abstand vergrößert wird, wird das gewünschte Ziel der Berührungsverhinderung erreicht, ohne daß der Ofen unnötig verlängert werden muß, da in den übrigen Bereichen, in denen eine Berührung nicht kritisch ist, der Abstand entsprechend gering gehalten wird.

**Patentansprüche**

1. Verfahren zum Brennen von glasierten Fliesen in einem Rollenofen, bei dem die Fliesen unmittelbar auf die Rollen aufgelegt und von diesen transportiert werden und der Abstand zwischen den Kanten der Fliesen so bemessen wird, daß eine Berührung während des Durchlaufs durch die Brennzone verhindert wird, dadurch gekennzeichnet, daß die Fliesen mit einer glasierten Kante nach vorn oder hinten angeordnet werden und die Rollen in der Brennzone schneller als die Rollen vor der Brennzone angetrieben werden, so daß sich der Abstand zwischen den Kanten der Fliesen in Transportrichtung vergrößert.

2. Verfahren nach Anspruch 1, dadurch gekennzeichnet, daß die Rollen hinter der Brennzone wieder langsamer angetrieben werden, um den Abstand zwischen den Kanten der Fliesen wieder zu verringern.

3. Rollenofen zur Durchführung des Verfahrens nach Anspruch 1 oder 2 mit einer Trocken- oder Vorwärmzone, einer Brennzone und einer Kühlzone, dadurch gekennzeichnet, daß die Rollen (2) in der Brennzone (C, D) mit höherer Geschwindigkeit antreibbar sind als in den anderen Zonen.

4. Rollenofen nach Anspruch 3, dadurch gekennzeichnet, daß die Rollen (2) in der Brennzone in zwei Abschnitte (C, D) zusammengefaßt sind, von denen die Rollen des in Transportrichtung ersten Abschnitts (C) etwas langsamer als die Rollen des anschließenden Abschnitts (D) antreibbar sind.

**Claims**

1. Process for the baking of glazed tiles in a roller-type heating furnace in which the tiles are directly placed on the rollers and transported by them and the distance between the edges of the tiles is dimensioned so that they are prevented from touching one another during their passage through the baking zone, characterised in that the tiles are arranged with a glazed edge at the front or at the back and the rollers in the baking zone are driven faster than the rollers in front of the baking zone so that the distance between the edges of the tiles increases in the direction of travel.

2. Process according to claim 1, characterised in that the rollers behind the baking zone are again driven more slowly so as again to decrease the distance between the edges of the tiles.

3. Roller-type heating furnace to perform the process according to Claim 1 or 2 having a drying or preheating zone, a baking zone and a cooling zone, characterised in that the rollers (2) in the baking zone (C, D) can be driven at a higher velocity than in the other zones.

4. Roller-type heating furnace according to Claim 3, characterised in that the rollers (2) in the baking zone are combined in two sections (C, D), of which the rollers of the first section (C) in the direction of travel can be driven somewhat slower than the rollers of the subsequent section (D).

## Revendications

1. Procédé de cuisson de carreaux vernissés dans un four à rouleaux, dans lequel les carreaux sont déposés directement sur les rouleaux et transportés par eux, la distance séparant les bords des carreaux étant choisie de manière à éviter tout contact pendant la traversée de la zone de cuisson, caractérisé en ce que les carreaux comportant un bord vernissé sont placés vers l'avant ou vers l'arrière et que les rouleaux montés dans la zone de cuisson peuvent être entraînés plus rapidement que les rouleaux montés en avant de la zone de cuisson, de manière que la distance séparant les bords des carreaux dans le sens du transport soit plus grande.

2. Procédé selon la revendication 1, caractérisé en ce que les rouleaux montés en arrière de la zone de cuisson peuvent être de nouveau entraînés plus lentement, de manière à réduire la distance séparant les bords des carreaux.

3. Four à rouleaux pour l'application du procédé selon l'une des revendications 1 ou 2, comportant une zone de séchage ou de préchauffage, une zone de cuisson et une zone de refroidissement, caractérisé en ce que les rouleaux (2) montés dans la zone de cuisson (C, D) peuvent être entraînés à plus grande vitesse que ceux des autres zones.

4. Four à rouleaux selon la revendication 3, caractérisé en ce que les rouleaux (2) montés dans la zone de cuisson se subdivisent en deux groupes, les rouleaux du groupe (C) qui est le premier dans le sens du transport pouvant être entraînés un peu plus lentement que les rouleaux du secteur suivant (D).

FIG.1

A             B             C             D             E             F

0 145 944

FIG. 2

°C

1170°

600°

0°

A  B  C  D  E  F

Vorlauf: m/Min.  1,2  1,36  1,54  1,54  1,2